# EUROPEAN PATENT APPLICATION

(11) **EP 4 420 767 A1**
(43) Date of publication of application: **28.08.2024**
(21) Application number: 24159147.8
(22) Date of filing: 22.02.2024
(51) Int. Cl.: B01D 67/00, B01D 71/16, B01D 71/34, B01D 71/64, B01D 71/68

(54) **MODULAR GREEN SOLVENT COMPOSITION FOR PREPARING POLYMERIC MEMBRANES**

(30) Priority: 27.02.2023 IT 202300003420
(71) Applicant: Soft Chemicals S.r.l., 21050 Marnate, Varese (IT); Consiglio Nazionale Delle Ricerche, 00185 Roma (IT)
(72) Inventor: FIGOLI, Alberto, I-87050 Lappano, COSENZA (IT); GALIANO, Francesco, I-87020 Santa Maria del Cedro,COSENZA (IT); RUSSO, Francesca, I-87020 Buonvicino, COSENZA (IT); ZAGO, Mirko, I-21010 Cardano al Campo, VARESE (IT); MANENTI, Alberto, I-21010 Arsago Seprio,VARESE (IT)
(74) Representative: Long, Giorgio

(57) **Abstract**

An object of the present invention is a modular solvent composition, in particular an eco-friendly solvent composition, for use in preparing polymeric membranes.

In particular, the present invention relates to a solvent composition comprising:
a) a mixture of
- lactate esters,
- primary and/or secondary alcohols or propionic acid esters, and
- alkyl carbonates;
or
b) a mixture of
- fatty acid alkyl amides, and
- alkyl sulfoxides.

A further object of the invention is a process for obtaining dense or porous, planar or hollow polymeric membranes by the solvent composition of the invention.

## Description

### Field of the technique of the invention

An object of the present invention is a modular solvent composition, in particular an eco-friendly solvent composition, for use in preparing polymeric membranes.

### Prior art

Solvents are chemical products widely used in many sectors, including the sector of paints and varnishes, compositions for industrial and domestic cleaning, inks for printing, and extractive industry. However, a particular application consists in producing polymeric membranes.

In the framework of action for a sustainable development, the membrane technology can be considered a green and economically competitive alternative compared to conventional separation technologies. Within such technology, one of the research objectives that arouses more interest is the preparation of membranes in a more sustainable manner. Nowadays, preparing the membranes still requires using organic solvents such as N,N-dimethylformamide (DMF), N,N-dimethyl-acetamide (DMA), and N-methyl-2-pyrrolidone (NMP) which are considered toxic for humans and environment, added to the candidate list as Substances of Very High Concern (SVHC). Such solvents seriously limit the ability to work under health and environment safety conditions.

As previously mentioned above, the membrane processes are widely recognized as green and sustainable technologies, but the preparation process of the membrane is not entirely sustainable, as it implies using dangerous and toxic solvents and globally releasing over 50 billion litres of water contaminated by using such solvents. Most of the solvent, in fact, is released during the phase inversion process in a membrane coagulation bath, and the residues are discarded by the sequential washing phases.

The majority of solvents used for preparing membranes such as NMP, DMF, and DMA derive from petroleum sources, with all the problems related to fossil resource exhaustion, and to the related greenhouse gas emissions. Instead, halogenated solvents, such as chloroform and dichloromethane (DCM), used for producing dense membranes by the EIPS technique, are suspected of carcinogenic potential according to the IARC evaluations by the World Health Organization.

NMP, DMF, and DMA are dipolar aprotic solvents with a high boiling point and a good water solubility. They have a strong dissolving power, but this characteristic is often associated with a high reprotoxicity. Recently, the U.S. Environmental Protection Agency (EPA) and the European Commission have proposed, for example, to prohibit NMP, while DMF and DMA are comprised within the restriction list REACH, XVII attachment with a two-year transient period for all the industrial fields. However, their high polarity makes them suitable for use with common polymers such as PVDF, PES, polysulfone (PSF), and cellulose acetate (CA) in membrane preparation. For example, highly porous, hollow fibre, PVDF membranes using DMF as the solvent are known. Other researchers have investigated the PVDF membrane morphology with different solvents, including NMP, DMF, and DMA. In order to limit the use of unwanted and toxic solvents in membrane preparation, alternative strategies are often directed to structurally similar compounds that are not yet covered by legislation and regulations normally requested for imposing such limitations.

Thus, there is a hope for significant progresses in favour of more sustainable alternative solvents based on biomass. In fact, bio-based chemical substances are widely recognized as an essential instrument for mitigating climate changes. The emerging solvents investigated for producing membranes are water, ionic liquids, and/or deep eutectic solvents (DESs), as well as sustainable (bio-derivative and synthetic) dipolar aprotic solvents. Among the greenest aprotic solvents, we find methyl-5-(dimethylamino)-2-methyl-5-oxopentanoate (Polarclean), Cyrene, dimethyl isosorbide (DMI), triethyl phosphate, diethylene glycol monoacetate, glycerol triacetate (triacetin), acetyl tributyl citrate, glycol triethylene diacetate, acetyl triethylene citrate, triethyl citrate, that have been proposed as non-toxic solvents for producing polymeric membranes by phase inversion technique.

Therefore, there is a need for overcoming the current limits and guaranteeing the complete substitution of conventional solvents with greener solvents in membrane preparation. The priorities are to minimize toxic wastes, reduce fossil resource consumption and greenhouse gas emissions while producing solvents, giving a substantial contribution to climate change mitigation, reduce to the minimum the potential for explosions and fires related to using the same, and guarantee a sustainable disposal of the membrane at the end of its life cycle.

### Summary of the invention

The present invention addresses this problem by using a new generation of green solvent mixtures based on lactate esters, primary and/or secondary alcohols or propionic acid esters and alkyl carbonates or, alternatively, based on fatty acid alkyl amides and alkyl sulfoxides for promoting a more sustainable membrane preparation.

With such solvent mixtures, it has been found that it is possible to produce membranes having a planar configuration and hollow fibre having a variety of structures, from dense to porous, with potential applications in different fields such as gas separation, reverse osmosis (RO), nanofiltration (NF), microfiltration (MF), and ultrafiltration (UF).

Thus, an object of the present invention is a solvent composition as outlined in any one of claims 1 to 6.

A further object of the present invention is a process for obtaining dense or porous membranes using the solvent composition according to the invention, as outlined in any one of claims 7 to 14.

The text of the appended claims is an integral part of the present description for the purposes of sufficiency of the description.

Additional characteristics and advantages of the process according to the invention will result from the description of preferred examples of the embodiments reported hereinafter, provided as indicative but non limiting.

### Detailed description of the invention

The present invention relates to a solvent composition comprising:
a) a mixture of
   - lactate esters,
   - primary and/or secondary alcohols or propionic acid esters, and
   - alkyl carbonates;
      and/or b) a mixture of
   - fatty acid alkyl amides, and
   - alkyl sulfoxides.

According to one embodiment, the solvent composition of the invention (composition 1) comprises or consists of:
- (C1-C4)alkyl lactates 30-50% by weight
- primary or secondary C3-C5 alcohols
   or (C1-C4)alkyl propionates 5-20% by weight
- mono or di(C1-C3)alkyl carbonates 40-50% by weight.

The mono or di(C1-C3)alkyl carbonates can be cyclic or linear.

Preferably, the solvent composition comprises or consists of:
- (C1-C4)alkyl lactates 32-48% by weight
- primary or secondary C3-C5 alcohols
   or (C1-C4)alkyl propionates 8-19% by weight
- mono or di(C1-C3)alkyl carbonates 43-49% by weight.

According to another embodiment, the solvent composition of the invention (composition 2) comprises or consists of:
- di(C1-C2)alkyl sulfoxide 45-75% by weight
- (C3-C10) fatty acids di(C1-C3)alkyl
   amides 25-55% by weight.

Preferably, the solvent composition comprises or consists of:
- di(C1-C2)alkyl sulfoxide 48-71% by weight
- (C3-C10) fatty acid di(C1-C3)alkyl
   amides 29-52% by weight.

Specific examples of the solvent compositions according to the invention are reported in tables 1-4.

**Table 1: example 1 (composition 1)**

| **Substance** | **CAS or EC number** | **% by weight** | **Bio content (EN 16785-2)** | **Bio carbon content (EN 16640)** |
|---|---|---|---|---|
| Ethyl lactate | 687-47-8 | 32.8 | 53% by weight | 44% by weight |
| Ethyl 3-etoxypropionate | 763-69-9 | 18.5 | | |
| Propylene carbonate | 108-32-7 | 48.7 | | |

**Table 2: example 2 (composition 1)**

| **Substance** | **CAS or EC number** | **% by weight** | **Bio content (EN 16785-2)** | **Bio carbon content (EN 16640)** |
|---|---|---|---|---|
| Ethyl lactate | 687-47-8 | 46.6 | 65% by weight | 57% by weight |
| 2-Methylpropan-1-ol | 78-83-1 | 9.2 | | |
| Propylene carbonate | 108-32-7 | 44.2 | | |

**Table 3: example 3 (composition 2)**

| **Substance** | **CAS or EC number** | **% by weight** | **Bio content (EN 16785-2)** | **Bio carbon content (EN 16640)** |
|---|---|---|---|---|
| Dimethyl sulfoxide | 67-68-5 | 70 | 93% by weight | 91% by weight |
| N,N-dimethyl decanamide | 14433-76-2 | 30 | | |

**Table 4: example 4 (composition 2)**

| **Substance** | **CAS or EC number** | **% by weight** | **Bio content (EN 16785-2)** | **Bio carbon content (EN 16640)** |
|---|---|---|---|---|
| Dimethyl sulfoxide | 67-68-5 | 51 | 81% by weight | 75% by weight |
| N,N-dimethyl-lactamide | 35123-06-9 | 49 | | |

**Table 5: hazard classification**

| | GHS classification | Hazard labelling |
|---|---|---|
| Example 1 | GHS05, GHS07 | H318, H335 |
| Example 2 | GHS05, GHS07 | H318, H335 |
| Example 3 | GH07 | H315, H319, H335, H412 |
| Example 4 | - | - |

As shown in table 5, the compositions according to the invention have a better labelling and toxicity profile compared to standard solvents for preparing membranes, as they are not classified as having reproductive or mutagenic toxicity (absence of H360 and H351 classifications). Further, the formulation of example 4 is not even labelled and thus not classified as a hazardous mixture according to GHS and CLP. Surprisingly, although both the formulations of examples 1 and 2 contain flammable substances, according to the CLP regulation (flash point <60°C), the overall flash point of both mixtures is greater than 60°C (data not reported and measured according to EN 3679), and therefore they must not be classified as flammable liquids. Further, all the designed mixtures have a very high "bio-based" content (minimum 53% w/w, for example 1, and maximum 93% w/w, for example 3), with all the advantages connected to climate change mitigation and fossil resource exhaustion, as widely recognized by the international scientific community.

Table 6 shows the results from solubility tests with the solvent compositions of the invention compared to some polymers normally used for preparing membranes.

**Table 6 - Polymer solubility with the compositions of the invention**

| **Solvent** | **Polymer** | **Temperature (°C)** | **Solubility** |
|---|---|---|---|
| Example 1 | PVDF 6012 | 100 | Homogeneous solution |
| Example 1 | PVDF-HFP copolymer | 60 | Homogeneous solution |
| Example 1 | Cellulose acetate | 65 | Homogeneous solution |
| Example 2 | PVDF 6012 | 80 | Homogeneous solution |
| Example 2 | PVDF-HFP copolymer | 80 | Homogeneous solution |
| Example 2 | Cellulose acetate | 65 | Homogeneous solution |
| Example 3 | PVDF 6012 | 70 | Homogeneous solution |
| Example 3 | PVDF-HFP copolymer | 60 | Homogeneous solution |
| Example 3 | PES | 80 | Homogeneous solution |
| Example 3 | Polyimide (Matrimid^{®} 5218) | 40 | Homogeneous solution |
| Example 3 | Cellulose acetate | 40 | Homogeneous solution |
| Example 4 | PVDF 6012 | 50 | Homogeneous solution |
| Example 4 | PVDF-HFP copolymer | 25 | Homogeneous solution |
| Example 4 | PES | 25 | Homogeneous solution |
| Example 4 | Polyimide (Matrimid^{®} 5218) | 25 | Homogeneous solution |
| Example 4 | Cellulose acetate | 40 | Homogeneous solution |

| | | | |
|---|---|---|---|
| PVDF = polyvinylidene fluoride; HFP = perfluoropropene; PES = polyethersulfone | | | |

In particular, it is to be noted that the compositions of examples 3 and 4 (composition 2 comprising mixtures of DMSO with N,N-dimethyl decanamide and N,N-dimethyl lactamide, respectively) have highlighted a dissolving power with all of the tested polymers. DMSO has already been used for preparing membranes, but the major problem with its use and manipulation is its extremely high freezing point (18°C) . This can be very problematic, mainly during winter, or in northern countries, where the environment can reach temperatures even way below 0°C. The problem is often overcome by heating DMSO before its use, or storing the solvent at heated systems, increasing the overall costs of the process for membrane production. Instead, this problem is overcome by the compositions of the invention, all of which have a freezing point lower than 0°C.

### PREPARATIVE EXAMPLE OF A SOLVENT MIXTURE ACCORDING TO THE INVENTION

In a blender suitable for using and preparing flammable solvents, therefore compliant with Atex regulations, the ingredients are added in order (e.g., for the formulation of example 2, ethyl lactate, 2-methylpropan-1-ol, and propylene carbonate at 46.6/9.2/44.2 weight ratio). We proceed with mixing at room temperature for 20-30 minutes, then a representative sample is withdrawn for quality control analyses. If the collected data are compliant with the specifications, the finished product is discharged in the appropriate packaging.

### PREPARING MEMBRANES WITH THE SOLVENT MIXTURES OF THE INVENTION

It has been found that, by using the solvent compositions of the invention, it is possible to produce planar and hollow fibre membranes having a variety of structures (from dense to porous) with potential applications in different fields (gas separation, nanofiltration (NF), microfiltration (MF), and ultrafiltration (U.F.)).

The process for producing the membrane comprises the following steps:
1) preparing a homogeneous solution consisting of a polymer, a solvent composition as defined above, and optionally additives for forming pores solubilized at a specific temperature;
2) spreading the solution on an appropriate support and obtaining a membrane by a phase inversion process.

The temperature in step 1) ranges between 70°C and 130°C, preferably between 80°C and 120°C.

In step 1), the polymer concentration ranges between 8% and 20% by weight, preferably between 10% and 15% by weight, and the concentration of additives for pore formation, when present, ranges between 3% and 25% by weight, preferably between 5% and 20% by weight. The dynamic viscosity of the solution preferably ranges between 50 and 500 cP.

Preferably, the polymers are selected from polyvinylidene difluoride, polyethersulfone, polyimide and cellulose acetate.

Preferably, the additives for pore formation are selected from polyethylene glycol (PEG) and polyvinylpyrrolidone.

The temperature in step 2) ranges between 30°C and 90°C, preferably between 40°C and 80°C.

For membrane formation, NIPS (Non-solvent Induced Phase Separation), VIPS (Vapour Induced Phase Separation) techniques or a combination thereof is preferably used.

Depending on the polymer and solvent composition used, the use or not of additives for forming pores, and the technique adopted, dense membranes or porous membranes can be obtained with a pore diameter smaller than 0.012 microns, or between 0.05 and 0.2 microns, or between 0.08 and 0.22 microns, or between 0.6 and 1.3 microns, or between 0.05 and 2.2 microns, or between 0.15 and 0.35 microns, or between 0.35 and 0.80 microns.

The invention will be further described hereinafter by means of several examples, the aim of which is simply illustrative, and it is not intended to limit the scope of invention.

### Polymers used

The polymers PVDF Solef^{®} 6012 (molecular weight - Mw: 380 Kg/mol), PVDF-HFP 21510 (Mw: 290-310 Kg/mol) and PES (Veradel^{®} 3000 P; Mw = 60 kg/mol) were provided by Solvay Specialty Polymers (Bollate (MI), Italy). Polyimide (Matrimid^{®} 5218, 3,3',4,4'-benzophenone tetracarboxylic dianhydride and diaminophenylindane) were kindly provided by Huntsman (Huntsman Advanced Materials, Warsaw, Poland). Cellulose acetate and polyethylene glycol (PEG200) (Mw = 0.2 kg/mol) were purchased from Sigma Aldrich. Polyvinylpyrrolidone (PVP K17) (Mw = 9 kg/mol) was purchased from BASF (Ludwigshafen, Germany). The polymers and PVP K17 were dried in vacuum at 40°C for 12 hours before use. Distilled water was used at 15°C for the coagulation bath and at 60°C for membrane washing.

### Membrane characterization test

### Porosity measurement

Porosity is measured by using a gravimetric analysis according to the procedure described in particular in F. Russo, F. Galiano, F. Pedace, F. Aricò, A. Figoli, Dimethyl Isosorbide As a Green Solvent for Sustainable Ultrafiltration and Microfiltration membranes Preparation, ACS Sustainable Chem. Eng. 8 (2020) 659-668. doi:10.1021/acssuschemeng.9b06496.

### Thickness measurement

The membrane thickness was evaluated by a digimatic micrometer (Mitutoyo 543-561D, metric quadrant indicator, range of measurement 0 → 30 mm, 0.0005 mm, resolution 0.001 mm, 1.5 µm).

### Contact angle measurement

The membrane wettability was measured by the contact angle method by using a CAM 200 KSV instrument (Finland).

### Morphological analysis

The morphology was determined by scanning electron microscopy (SEM; Zeiss EVO, MA100, Assing, Italy).

### Pore diameter measurement

The pore diameter was measured according to the bubble point method by using an automated capillary flow porometer instrument POROLUX TM 1000 (Porometer, IB-FT GmbH, 12277 Berlin, Germany).

### Water permeability measurement

The water permeability (PWP) was measured by using a recirculation cell at a transmembrane pressure up to 4 bar.

### EXAMPLES OF MEMBRANE PREPARATION

### Preparation 1 - Preparing PVDF and PES porous membranes by using the solvent composition of example 3 via NIPS technique

PVDF (homopolymer and copolymer) and PES membranes were prepared by non-solvent induced phase separation (NIPS) technique by using the solvent composition of example 3, and water as the coagulation bath.

The solutions were prepared by adding the correct amount of polymer in the solvent and varying the additive amount (5% by weight of PVP K17, and 10, 15 and 20% by weight of PEG200). The addition of PVP K17 and PEG200 in the solution played an important role in the demixing rate during the phase inversion and affected the final membrane morphology. These additives are employed for increasing pore size and membrane porosity due to their affinity with the water contained in the coagulation bath. The polymer concentration was also changed from 10% by weight to 20% by weight. The solutions were maintained under stirring at specific temperatures (120°C for PVDF 6012, 80°C for PVDF 21510, and 80°C for PES) for two hours, until they became homogeneous.

The complete polymer dissolution was obtained in 2 hours for all of the polymers. Before spreading, the solution was left without stirring for 2 hours, as to eliminate possible air bubbles. Then, the polymeric solution was spread by using a micrometric knife on a glass support at 80°C for PVDF 6012 and PVDF 2150, and at 40°C for PES. The membrane composition and the preparation conditions are summarized in table 7.

**Table 7**

| **Comp ositions** | | | | | | | | |
|---|---|---|---|---|---|---|---|---|
| **Membrane** | **PVDF 6012** | **PVDF 21510** | **PES** | **PEG₂₀₀** | **PVP K17** | **Composition of example 3** | **Solution temperature** | **Spreading temperature** |
| | **(wt%)** | **(wt%)** | **(wt%)** | **(wt%)** | **(wt%)** | **(wt%)** | **(°C)** | **(°C)** |
| **M1-6012** | 10 | - | - | - | - | 90 | 120 | 80 |
| **M2-6012** | 12 | - | - | - | - | 88 | | |
| **M3-6012** | 15 | - | - | - | - | 85 | | |
| **M4-6012** | 20 | - | - | - | - | 80 | | |
| **M5-6012** | 15 | - | - | - | 5 | 80 | | |
| **M7-6012** | 15 | - | - | 10 | - | 65 | | |
| **M8-6012** | 15 | - | - | 15 | - | 60 | | |
| **M9-6012** | 15 | - | - | 20 | - | 55 | | |
| **M10-6012** | 15 | - | - | 15 | 5 | 55 | | |
| **M1-21510** | - | 10 | - | - | - | 90 | 80 | 80 |
| **M2-21510** | - | 12 | - | - | - | 88 | | |
| **M3-21510** | - | 15 | - | - | - | 85 | | |
| **M4-21510** | - | 20 | - | - | - | 80 | | |
| **M5-21510** | - | 15 | - | - | 5 | 80 | | |
| **M7-21510** | - | 15 | - | 10 | - | 65 | | |
| **M8-21510** | - | 15 | - | 15 | - | 60 | | |
| **M9-21510** | - | 15 | - | 20 | - | 55 | | |
| **M10-21510** | - | 15 | - | 15 | 5 | 55 | | |
| **M1-PES** | - | - | 10 | - | - | 90 | 80 | 40 |
| **M2-PES** | - | - | 12 | - | - | 88 | | |
| **M3-PES** | - | - | 15 | - | - | 85 | | |
| **M4-PES** | - | - | 20 | - | - | 80 | | |
| **M5-PES** | - | - | 15 | - | 5 | 80 | | |
| **M7-PES** | - | - | 15 | 10 | - | 65 | | |
| **M8-PES** | - | - | 15 | 15 | - | 60 | | |
| **M9-PES** | - | - | 15 | 20 | - | 55 | | |
| **M10-PES** | - | - | 15 | 15 | 5 | 55 | | |

The viscosity results at the spreading temperature for the solutions consisting of 15% by weight of polymers with and without 5% by weight of PVP K17 and 15% by weight of PEG200 were reported in table 8. The viscosity range was between 70 and 489 cP.

**Table 8 - Polymeric solution viscosity at the spreading temperature**

| **Membranes** | **Compositions** | **Viscosity** (cP) |
|---|---|---|
| | Composition of example 3 Viscosity = 2.75 mPa.s (25° C) | |
| **M2-6012** | 12 wt% PVDF 6012 - M012 (80°C) | 55 |
| **M3-6012** | 15 wt%PVDF 6012 - M012 (80 °C) | 160 |
| **M10-6012** | 15 wt%PVDF 6012 - 5 wt% PVP K17 - 15 wt% PEG₂₀₀ - M012 (80°C) | 489 |
| **M3-21510** | 15 wt%PVDF 21510 - M012 (80°C) | 229 |
| **M10-21510** | 15 wt%PVDF 21510 -5 wt% PVP K17-15 wt% PEG₂₀₀ - M012 (80°C) | 254 |
| **M3-PES** | 15 wt%PES - M012 (40°C) | 211 |
| **M4-PES** | 15 wt%PES -5 wt% PVP K17 - M012 (40°C) | 106 |
| **M10-PES** | 15 wt%PES -5 wt% PVP K17-15 wt% PEG₂₀₀ - M012 (40°C) | 70 |

### PVDF 6012 membranes with the solvent composition of example 3 via NIPS

The membrane morphology can be affected by the polymer/solvent/non-solvent system during the phase inversion process, the viscosity of the solution, and also the operating conditions. For the polymer-additive-solvent system, the effect from 5% by weight of PVP K17 (membrane M4 6012), and 10% by weight and 15% by weight of PEG200 (membranes M5 6012 and M6 6012, respectively) was investigated. The PVDF 6012 membrane had a cross-sectional spongy structure, a porous surface on the lower surface and a dense surface on the top surface. The effect of PEG200 was evaluated also by maintaining the concentration of polymer (15% by weight) and additive PVP (5% by weight) constant. The membrane with 15% by weight of PEG200 (membrane M7 6012) showed a cross-sectional channel (finger-like) structure.

The values for thickness, porosity and contact angle are reported in table 9. The thickness of PVDF 6012 membranes prepared with the solvent composition of example 3 ranged from 93 to 138 µm, while the porosity ranged between 68% and 86%. The contact angle of the top surface ranged from 85° to 97°.

**Table 9 - Thickness, porosity, and contact angle (CA) of the tested PVDF 6012 membranes**

| **Membranes** | | | | | | | |
|---|---|---|---|---|---|---|---|
| **Code** | **PVDF 6012** | **PEG₂₀₀** | **PVP K17** | **Composition of example 3** | **Thickness** | **Porosity** | **CA** |
| | **(wt%)** | **(wt%)** | **(wt%)** | **(wt%)** | **(µm)** | **(%)** | **(Top size °)** |
| **M3-6012** | 15 | - | - | 85 | 108 ± 1 | 73 ± 2 | 89 ± 1 |
| **M4-6012** | 20 | - | - | 80 | 138 ± 1 | 68 ± 2 | 85 ± 1 |
| **M5-6012** | 15 | - | 5 | 80 | 93 ± 1 | 73 ± 2 | 91 ± 2 |
| **M7-6012** | 15 | 10 | - | 65 | 126 ± 3 | 77 ± 1 | 95 ± 1 |
| **M8-6012** | 15 | 15 | - | 60 | 145 ± 1 | 83 ± 3 | 97 ± 2 |
| **M10-6012** | 15 | 15 | 5 | 55 | 111 ± 1 | 86 ± 2 | 87 ± 1 |

The pore size and water permeability (PWP) of the membranes are reported in table 10.

**Table 10 - Pore size and PWP of the tested PVDF 6012 membranes**

| **Membranes** | | | | | | |
|---|---|---|---|---|---|---|
| **Code** | **PVDF 6012** | **PEG₂₀₀** | **PVP K17** | **Composition of example 3** | **Pore size** | **PWP** |
| | **(wt%)** | **(wt%)** | **(wt%)** | **(wt%)** | **(µm)** | **(L/m²hbar)*** |
| **M3-6012** | 15 | - | - | 85 | 0.09 ± 0.10 | 272 |
| **M5-6012** | 15 | - | 5 | 80 | 0.3 ± 0.04 | 371 |
| **M7-6012** | 15 | 10 | - | 65 | 0.6 ± 0.02 | 891 |
| **M8-6012** | 15 | 15 | - | 60 | 0.46 ± 0.03 | 524 |
| **M10-6012** | 15 | 15 | 5 | 55 | 0.4 ± 0.16 | 272 |

The error is below 5%
The PVDF 6012 membranes obtained by using the solvent composition of example 3 showed a pore size ranging between 0.09 pm and 0.6 µm.

### PVDF-HFP 21510 membranes using the solvent composition of example 3 via NIPS

The structure of the membrane with 15% by weight of PVDF-HFP 21510 is characterized by a channel (finger-like) morphology, and top and lower porous layers. The membranes with additives have a morphological similarity through all the cross-section. In particular, in all cases, it is a spongy structure, with a top and lower porous morphology.

The PVDF 21510 membranes prepared by using the solvent composition of example 3 via NIPS technique showed a thickness ranging between 61 and 121 pm and a porosity between 74% and 93%, as reported in table 11.

**Table 11 - Thickness and porosity of the tested PVDF 21510 membranes**

| **Membranes** | | | | | | |
|---|---|---|---|---|---|---|
| **Code** | **PVDF 21510** | **PEG₂₀₀** | **PVP K17** | **Composition of example 3** | **Thickness** | **Porosity** |
| | **(wt%)** | **(wt%)** | **(wt%)** | **(wt%)** | **(µm)** | **(%)** |
| **M3-21510** | 15 | - | - | 85 | 121 ± 3 | 83 ± 3 |
| **M5-21510** | 15 | - | 5 | 80 | 61 ± 1 | 93 ± 2 |
| **M7-21510** | 15 | 10 | - | 65 | 96 ± 2 | 75 ± 1 |
| **M8-21510** | 15 | 15 | - | 60 | 68 ± 1 | 80 ± 1 |
| **M10-21510** | 15 | 15 | 5 | 55 | 67 ± 1 | 74 ± 2 |

As shown in table 12 below, the membranes obtained have a pore size between 0.20 pm and 0.66 pm with a PWP ranging between 227 and 572 L/m²hbar.

**Table 12 - Pore size and PWP of the tested PVDF 21510 membranes**

| **Membranes** | | | | | | |
|---|---|---|---|---|---|---|
| **Code** | **PVDF 21510** | **PEG** | **PVP K17** | **NS3** | **Pore size** | **PWP** |
| | **(wt%)** | **(wt%)** | **(wt%)** | **(wt%)** | **(µm)** | **(L/m²hbar)*** |
| **M3-21510** | 15 | - | - | 85 | 0.66 ± 0.14 | 572 |
| **M5-21510** | 15 | - | 5 | 80 | 0.53 ± 0.04 | 530 |
| **M7-21510** | 15 | 10 | - | 65 | 0.24 ± 0.02 | 300 |
| **M8-21510** | 15 | 15 | - | 60 | 0.20 ± 0.03 | 227 |
| **M10-21510** | 15 | 15 | 5 | 55 | 0.33 ± 0.16 | 232 |

The error is below 5%

### PES membranes using the solvent composition of example 3 via NIPS

The PES membrane morphology was similar to each other, indicating that the phase separation process, mainly during the NIPS phase, was very rapid due to the high interactions between water and the solvent. All the PES membranes were noted to have a dense top layer and channel (finger-like) structures having macrovoids in the lowest part of the membrane.

Thickness, porosity, and contact angle of the prepared membranes are reported in table 13. Thickness ranged from 106 pm to 159 µm; porosity ranged between 84% and 92%; average contact angle of the PES membranes ranged from 65° to 73°.

**Table 13 - Thickness, porosity, and contact angle of the tested PES membranes**

| **Membranes** | | | | | | | |
|---|---|---|---|---|---|---|---|
| **Code** | **PES** | **PEG₂₀₀** | **PVP K17** | **MD012** | **Thickness** | **Porosity** | **CA** |
| | **(wt%)** | **(wt%)** | **(wt%)** | **(wt%)** | **(µm)** | **(%)** | **(Top size °)** |
| **M3-PES** | 15 | - | - | 85 | 106 ± 3 | 87 ± 3 | 71 ± 1 |
| **M5-PES** | 15 | - | 5 | 80 | 159 ± 1 | 92 ± 1 | 68 ± 2 |
| **M7-PES** | 15 | 10 | - | 65 | 135 ± 3 | 87 ± 2 | 65 ± 1 |
| **M8-PES** | 15 | 15 | - | 60 | 145 ± 1 | 84 ± 2 | 73 ± 2 |
| **M10-PES** | 15 | 15 | 5 | 55 | 158 ± 1 | 85 ± 1 | 66 ± 1 |

Table 14 shows the results in terms of pore size and PWP. The pore size ranged from 0.06 to 0.11 µm, with a water permeability ranging between 84 and 647 L/m²hbar.

**Table 14 - Pore size and PWP of PES membranes by using the solvent composition of example 3**

| **Membranes** | | | | | | |
|---|---|---|---|---|---|---|
| **Code** | **PES** | **PEG** | **PVP K17** | **MD012** | **Pore size** | **PWP** |
| | **(wt%)** | **(wt%)** | **(wt%)** | **(wt%)** | **(µm)** | **(L/m²hbar)*** |
| **M3-PES** | 15 | - | - | 85 | 0.06 ± 0.1 | 84 |
| **M5-PES** | 15 | - | 5 | 80 | 0.08 ± 0.1 | 371 |
| **M7-PES** | 15 | 10 | - | 65 | 0.11 ± 0.02 | 647 |
| **M8-PES** | 15 | 15 | - | 60 | 0.10 ± 0.1 | 596 |
| **M10-PES** | 15 | 15 | 5 | 55 | 0.08 ± 0.1 | 401 |

The error is below 5%

### Preparation 2 - Preparing PVDF and PES porous membranes by using MD012 via VIPS technique

The PVDF (homopolymer and copolymer) and PES membranes were prepared by the vapour induced phase separation (VIPS) technique by using the solvent composition of example 3 and water as the coagulation bath (table 15) . The polymers were added to the solvent at a certain temperature to obtain a complete solubilization within 2 hours. The solutions were spread on a glass support by using a micrometric knife set at a thickness ranging between 200 microns and 250 microns. The membranes were prepared in a climatic chamber at room temperature (25°C) and constant humidity (65%) by exposing them for 2,5 minutes to humidity before the immersion in a coagulation bath consisting of water (25°C). The polymer concentration was 15% by weight with and without the presence of additives (15% by weight of PEG200 and 5% by weight of PVP K17).

**Table 15 - PVDF and PES membranes using the composition of example 3 via VIPS technique**

| **Membranes** | **Compositions** | | | | | | **Solution temperature** | **Spreading temperature** | **Humidity exposure** |
|---|---|---|---|---|---|---|---|---|---|
| | **PVDF 6012** | **PVDF 21510** | **PES** | **PEG 200** | **PVP K17** | **Composition of example 3** | | | |
| | **(wt%)** | **(wt%)** | **(wt%)** | **(wt%)** | **(wt%)** | **(wt%)** | **(°C)** | **(°C)** | **mins** |
| **M3-6012** _{VIPS} | 15 | - | - | - | - | 85 | 80 | 80 | 2.5 |
| **M10-6012** _{VIPS} | 15 | - | - | 15 | 5 | 65 | | | 2.5 |
| **M3-21510** _{VIPS} | - | 15 | - | - | - | 85 | 80 | 80 | 2.5 |
| **M10-21510** _{VIPS} | - | 15 | - | 15 | 5 | 65 | | | 2.5 |
| **M3-PES** _{VIPS} | - | - | 15 | - | - | 85 | 80 | 40 | 2.5 |
| **M10-PES** _{VIPS} | - | - | 15 | 15 | 5 | 65 | | | 2.5 |

In table 16, membrane characterization data obtained by using the solvent composition of example 3 via VIPS are reported.

The experimental results show that membrane exposition to humidity resulted in an increasing in their pore size, being within the microfiltration range and ranging between 0.17 pm and 2.38 µm.

**Table 16 - Porosity, pore diameter, thickness, and permeability of the tested membranes obtained via VIPS technique.**

| **Membranes** | **Porosity** | **Average pore diameter** | **Thickness** | **Permeability** |
|---|---|---|---|---|
| | **(%)** | **(µm)** | **(µm)** | **(L/m²h bar)** |
| **M3-6012 VIPS** | 75 ± 1 | 2.38 | 98 ± 2 | 12537 |
| **M10 6012 VIPS** | 81 ± 3 | 0.72 | 84 ± 2 | - |
| **M3-21510 VIPS** | 78 ± 1 | 1.04 | 128 ± 2 | 7165 |
| **M10-21510 VIPS** | 72 ± 1 | 0.19 | 108 ± 1 | 490 |
| **M3-PES VIPS** | 84 ± 2 | 0.17 | 159 ± 3 | 80 |
| **M10-PES VIPS** | 80 ± 1 | 2.02 | 114 ± 1 | 919 |

The (horizontal and vertical) shrinkage grade of the membranes once dried was calculated by measuring the size of the initial film soon after spreading in the climatic chamber (before forming the membrane) and after forming the same. The contraction/shrinkage grade was determined by analysing three samples for each membrane. In all cases, it was measured as being lower than 5%.

### Preparation 3 - Preparing PVDF-HFP porous membranes by using the solvent composition of example 2 via NIPS technique

The membranes were prepared from homogeneous solutions of 15% by weight of PVDF-HFP copolymer (PVDF 21510) solubilized in the solvent composition of example 2 at 80°C. The temperature of the solutions with additives (PEG200: 10 wt%/15 wt%/20 wt% and PVP K17: 5 wt%) was set at 100°C, as reported in table 17. The solutions were spread with a 250 micron gap on a glass sheet via the NIPS technique by using water as the coagulation bath.

**Table 17 - PVDF 21510 membranes prepared by using the solvent composition of example 2 by means of NIPS technique**

| **Membranes** | **Compositions** | | | | |
|---|---|---|---|---|---|
| | **PVDF 21510** | **PEG200** | **PVP K17** | **Composition of example 2** | **Spreading temperature** |
| | **(wt%)** | **(wt%)** | **(wt%)** | **(wt%)** | **(°C)** |
| D1-21510 | 10 | - | - | 90 | 80 |
| D2-21510 | 12 | - | - | 88 | 80 |
| D3-21510 | 15 | - | - | 85 | 80 |
| **D4-21510** | 15 | - | 5 | 80 | 100 |
| **D5-21510** | 15 | 10 | - | 65 | 100 |
| **D7-21510** | 15 | 15 | - | 60 | 100 |
| **D8-21510** | 15 | 15 | 5 | 55 | 100 |
| **D9-21510** | 15 | 20 | 5 | 50 | 100 |

The results in terms of thickness, porosity, pore size, and water permeability are reported in table 18.

The membranes had a porosity ranging between 60% and 85% and a pore size between 0.01 and 0.20 µm.

**Table 18 - PVDF 21510 membrane characterization prepared by using the solvent composition of example 2 via NIPS technique**

| **Membranes** | **Porosity** | | **Average pore diameter** | **Thickness** | | **Permeability** |
|---|---|---|---|---|---|---|
| | **(%)** | | **(µm)*** | **(µm)*** | | **(L/m²hbar)*** |
| | Average | Standard deviation | | Average | Standard deviation | Average |
| D1-21510 | - | - | - | - | - | - |
| D2-21510 | 85 | 3 | 0.2 | 40 | 1 | 106 |
| D3-21510 | 60 | 2 | 0.01 | 44 | 1 | 6 |
| **D4-21510** | 64 | 1 | 0.01 | 72 | 3 | 8 |
| **DS5-21510** | 79 | 2 | 0.17 | 79 | 2 | 61 |
| **DS7-21510** | 64 | 2 | - | 79 | 3 | - |
| **DS8-21510** | 85 | 2 | 0.13 | 70 | 2 | 82 |

The error is below 20.

### Preparation 4 - Preparing PVDF and PES porous membranes by using the solvent composition of example 4 via NIPS technique

The membranes were prepared from PVDF and PES (10% by weight) homogeneous membranes solubilized within the solvent composition of example 4. The temperature of PVDF 6012 solution was set at 50°C, while the temperatures of PVDF 21510 and PES polymeric solutions were set at 25°C. The PVDF 6012 solution was solid at room temperature (25°). All the solutions were spread by using a micrometric knife set at a thickness of 250 microns, and using the NIPS technique as the preparative technique, and using water as the coagulation bath (table 19).

**Table 19 - PVDF and PES porous membranes prepared by using the solvent composition of example 4 by means of NIPS technique**

| **Membranes** | **Compositions** | | | | | | **Solution temperature** | **Spreading temperature** |
|---|---|---|---|---|---|---|---|---|
| | **PVDF 6012** | **PVDF 21510** | **PES** | **PEG 200** | **PVP K17** | **Example 4** | | |
| | **(wt%)** | **(wt%)** | **(wt%)** | **(wt%)** | **(wt%)** | **(wt%)** | **(°C)** | **(°C)** |
| **MD013-6012** | 10 | - | - | - | - | 90 | 50 | 50 |
| **MD013-21510** | - | 10 | - | - | - | 90 | 25 | 25 |
| **MD013-PES** | - | - | 10 | - | - | 90 | 25 | 25 |

The membrane obtained had a porosity ranging between 70% and 85% and a pore size ranging between 0.05 and 0.2 µm.

### Preparation 5 - Preparing Matrimid^{®} 5218 porous membrane by using the solvent composition of example 4 via VIPS-NIPS technique

The membranes were prepared from homogeneous solutions of 10% by weight of Matrimid^{®} 5218 solubilized within the solvent composition of example 4. The solution temperature was set at 25°C for 2 hours. The solutions were spread with a micrometric knife set at a thickness of 250 microns via VIPS-NIPS technique under controlled humidity (65%) conditions, and for different evaporation times in a climatic chamber (0, 2.5, and 5 minutes).

The list of the membranes prepared is reported in table 20.

**Table 20 - Matrimid^{®} 5218 porous membranes prepared by using the solvent composition of example 4 via VIPS-NIPS technique**

| **Membranes** | **Compositions** | | **Exposure time to humidity (65%)** |
|---|---|---|---|
| | **Matrimid** | **Composition of example 4** | |
| | **(wt%)** | **(wt%)** | **(mins)** |
| **MATRIMID-OMINS** | 10 | 90 | 0 |
| **MATRIMID-2.5MINS** | 10 | 90 | 2.5 |
| **MATRIMID-5MINS** | 10 | 90 | 5 |

The values of pore size and porosity are reported in table 21. The membranes showed a porosity of 80% and a pore size between 0.41 and 0.96 µm.

**Table 21 - Pore diameter for membranes realized in Matrimid^{®} 5218 prepared by using the solvent composition of example 4 via VIPS-NIPS technique**

| **Membranes** | **Average pore diameter** | **Porosity** |
|---|---|---|
| | (µm) | (%) |
| **MATRIMID-OMINS** | 0.41 ± 1 | 80 ± 2 |
| **MATRIMID-2.5MINS** | 0.61 ± 3 | 83 ± 3 |
| **MATRIMID-5MINS** | 0.96 ± 1 | 86 ± 1 |

### Preparation 6 - Preparing Matrimid^{®} 5218 dense membranes by using the solvent composition of example 4 via solvent evaporation

The Matrimid^{®} 5218 polymer (10% by weight) was dissolved in the solvent composition of example 4 to form a 10% by weight solution. The membranes were then prepared via solvent evaporation. The solution was stirred for 24 hours at room temperature before being spread with a micrometric knife set at a thickness of 250 um on a glass support. The prepared membrane was allowed to evaporate in an oven at 45°C for 24 hours. The dried membranes were soaked in water to facilitate the removal from the glass sheet. The membranes were then dried at 60°C in vacuum for 12 hrs. The final thickness of the membranes was of 65 ± 2 um.

### Preparation 7 - Preparing cellulose acetate porous membranes by using the solvent mixtures of examples 1, 2, and 3 via NIPS technique

The biopolymer (cellulose acetate) membranes were prepared by using different solvents such as the solvent compositions of examples 1, 2, and 3. The polymer concentration was 10% by weight and the solutions were liquid at room temperature. The membranes were produced via NIPS technique by using water as the coagulation bath. The pore size was in the range of ultrafiltration.

### Preparation 8 - Preparing PVDF and PES porous membranes by using DMSO solvent via NIPS technique

In order to evaluate the presence of additional technical advantages by using our formulation for preparing membranes, a set of PVDF and PES membranes were produced by using the traditional DMSO solvent via NIPS technique. The membranes produced were characterized as reported in table 22.

**Table 22 - PVDF and PES membranes prepared by using DMSO as the solvent via NIPS technique**

| **Membranes** | **Compositions** | | | | | | | |
|---|---|---|---|---|---|---|---|---|
| | **PVDF 6012** | **PVDF 21510** | **PES** | **PEG200** | **PVP K17** | **DMSO** | **Solution temperature** | **Spreading temperature** |
| | **(wt%)** | **(wt%)** | **(wt%)** | **(wt%)** | **(wt%)** | **(wt%)** | **(°C)** | **(°C)** |
| DMSO-6012 | 15 | - | - | - | - | 85 | 90 | 80 |
| DMSO-21510 | - | 15 | - | - | - | 85 | 80 | 80 |
| DMSO-PES | - | - | 15 | - | - | 85 | 90 | 40 |

The characterizations in terms of porosity, pore size, thickness, and PWP are summarized in table 23. All the produced membranes showed a morphology characterized by macrovoids through the cross-section with a pore size in the microfiltration range (0.2 to 0.3 µm).

**Table 23 - Porosity, pore diameter, thickness, and permeability of the membranes prepared by using DMSO as the solvent**

| **Membranes** | **Porosity** | **Average pore diameter*** | **Thickness** | **Permeability** |
|---|---|---|---|---|
| | (%) | **(µm)** | **(µm)** | **(L/m²h bar**)* |
| DMSO-6012 | 86 ± 1 | 0.19 | 145 ± 2 | 106 |
| DMSO-21510 | 75 ± 1 | - | 89 ± 3 | - |
| DMSO-PES | 79 ± 3 | 0.31 | 118 ± 3 | 610 |

| | | | | |
|---|---|---|---|---|
| *The error is below 2% | | | | |

In summary, with the solvent compositions of the invention we obtained:
- via NIPS technique, membranes with a pore size of 0.01 µm, by using a solution containing:
   - the composition of example 2 as the solvent
   - 15% by weight of PVDF-HFP 21510 as the polymer
   - 5% by weight of PVP K17 as the additive
- via NIPS and VIPS-NIPS technique, membranes with a pore size ranging between 0.06 pm and 0.17 µm, by using a solution containing:
   - the composition of example 3 as the solvent
   - 15% by weight of PES
- via NIPS and VIPS-NIPS technique, membranes with a pore size ranging between 0.09 pm and 2 µm, by using a solution containing:
   - the composition of example 3 as the solvent
   - 15% by weight of PVDF 6012 as the polymer
- via NIPS and VIPS-NIPS technique, membranes with a pore size ranging between 0.66 pm and 1 µm, by using a solution containing:
   - the composition of example 3 as the solvent
   - 15% by weight of PVDF 21510 as the polymer
- via NIPS technique, membranes with a pore size of 0.1 µm, by using a solution containing:
   - the composition of example 3 as the solvent
   - 15% by weight of PES as the polymer
   - 15% by weight of PEG200 as the additive
- via NIPS and VIPS-NIPS technique, membranes with a pore size ranging between 0.08 pm and 2 µm, by using a solution containing:
   - the composition of example 3 as the solvent
   - 15% by weight of PES as the polymer
   - 15% by weight of PEG200 as the additive
   - 5% by weight of PVP as the additive
- via NIPS technique, membranes with a pore size of 0.2 µm, by using a solution containing:
   - the composition of example 3 as the solvent
   - 15% by weight of PVDF 21510 as the polymer
   - 15% by weight of PEG200 as the additive
- via NIPS and VIPS-NIPS technique, membranes with a pore size ranging between 0.19 pm and 0.33 µm, by using a solution containing:
   - the composition of example 3 as the solvent
   - 15% by weight of PVDF 21510 as the polymer
   - 15% by weight of PEG200 as the additive
   - 5% by weight of PVP as the additive
- via NIPS and VIPS-NIPS technique, membranes with a pore size ranging between 0.40 pm and 0.72 µm, by using a solution containing:
   - the composition of example 3 as the solvent
   - 15% by weight of PVDF 6012 as the polymer
   - 15% by weight of PEG200 as the additive
   - 5% by weight of PVP as the additive
- via NIPS technique, membranes with a pore size of 0.41 µm, by using a solution containing:
   - the composition of example 4 as the solvent
   - 10% by weight of Matrimid^{®} 5218 as the polymer
- via VIPS-NIPS technique, membranes with a pore size of 0.96 µm, by using a solution containing:
   - the composition of example 4 as the solvent
   - 10% by weight of Matrimid^{®} 5218 as the polymer

The same composition of Matrimid^{®} membrane was used for producing dense membranes with the same polymer by using the solvent evaporation technique.

As described above, using the solvent compositions according to the invention can provide several advantages compared with using single substances (such as DMSO) in the processes of membrane production. Only to name a few:
- improvements in the preparation of the polymeric solution in terms of viscosity and temperature (energy and time saving),
- greater compatibility with traditional polymers and additives for membrane preparation,
- greater versatility (intended as the possibility to obtain a wide range of pore sizes without the presence of additives)
- greater membrane integrity that reflects the mechanical resistance of the final membrane
- improvement in work conditions in terms of exposure to reprotoxic and/or carcinogenic substances for workers involved every day in processes of membrane production
- differentiation of the product depending on the type of membranes to be produced: the use of bio-based solvents for producing membranes is unique
- use of solvent mixtures that offer a high scalability and adaptability to specific industrial applications
- easy integration of the technology to pre-existent industrial plants (drop-in) without additional investments
- sustainable leadership: the environmental advantages are to be found in using natural and available resources with positive consequences in environmental terms
- territorial leadership: the invention supports an industrial symbiosis, the membrane production being oriented to circularity.

The major target market for the technology is related to the production of both planar and tubular membranes for gas separation, treatment of waste (contaminated by organic compounds), municipal, domestic, and industrial water in need of a convenient treatment before being disposed (for example coming from textile, pharmaceutical, and/or agro-food industries, etc.).

The produced membranes with a dense morphology can be applied in the following membrane processes: 1) pervaporation for separating azeotropic mixtures; 2) reverse osmosis for desalting seawater; 3) gas separations (removal of CO₂, O₂, H₂, etc.), wherein the polymer has a high affinity with one of the gases intended to be separated.

Instead, the porous membranes produced, depending on pore size, can be used in several applications such as microfiltration (pores from about 10 microns to 0.1 microns), ultrafiltration (pores from about 0.1 microns to about 0.05 microns), and nanofiltration (pores from about 0.05 microns to about 0.001 microns). The type of polymer is important, as it implies certain characteristics of the membrane. The solvent compositions of the invention can also be used for preparing a new class of membranes, called membrane contactors, including several membrane processes such as membrane distillation (MD), membrane condensation (MC), membrane crystallization (MCr), etc., where the membrane must be porous (pore size of about 0.1 microns - 1 micron) and the polymer used must be hydrophobic (like PVDF).

The market opportunity for the proposed solution is wide and it is predicted to keep increasing in the near future. Since the usage versatility and dissolving power of the mixtures described in the invention, other target markets can be found in all those industrial fields where solvents deriving from fossil sources such as DMF, DMA, and NMP are normally used. By way of non exhaustive example, it is possible to mention the industrial cleaning and hygiene sector and the coating, adhesive, varnish, lacquer, and paint production sector.

It is apparent that only some particular embodiments of the present invention were described, to which one skilled in the art will be able to apply all those modifications required for its adaptation to particular applications, however without departing from the scope of protection of the present invention.

## Claims

1. A solvent composition comprising:
a) a mixture of
- lactate esters,
- primary and/or secondary alcohols or propionic acid esters, and
- alkyl carbonates;
or
b) a mixture of
- fatty acid alkyl amides, and
- alkyl sulfoxides.

2. The solvent composition according to claim 1, comprising or consisting of:
- (C1-C4)alkyl lactates 30-50% by weight
- primary or secondary C3-C5 alcohols
or (C1-C4)alkyl propionates 5-20% by weight
- mono or di(C1-C3)alkyl carbonates 40-50% by weight.

3. The composition according to claim 2, wherein the mono or di(C1-C3)alkyl carbonates can be cyclic or linear.

4. The solvent composition according to claim 2 or 3, comprising or consisting of:
- (C1-C4)alkyl lactates 32-48% by weight
- primary or secondary C3-C5 alcohols
or (C1-C4)alkyl propionates 8-19% by weight
- mono or di(C1-C3)alkyl carbonates 43-49% by weight.

5. The solvent composition according to claim 1, comprising or consisting of:
- di(C1-C2)alkyl sulfoxide 45-75% by weight
- (C3-C10) fatty acids di(C1-C3)alkyl
amides 25-55% by weight.

6. The solvent composition according to claim 5, comprising or consisting of:
- di(C1-C2)alkyl sulfoxide 48-71% by weight
- (C3-C10) fatty acid di(C1-C3)alkyl
amides 29-52% by weight.

7. A process for the production of planar or tubular polymeric membranes, comprising the following steps:
1) preparing a homogeneous solution consisting of a polymer, a solvent composition according to any one of claims 1 to 6 and, optionally, additives for the formation of pores at a predetermined temperature;
2) spreading the solution and obtaining a membrane by a phase inversion process.

8. The process according to claim 7, wherein the solubilization temperature in step 1) is comprised between 70°C and 130°C, preferably between 80°C and 120°C.

9. The process according to claim 7 or 8, wherein in step 1) the polymer concentration is comprised between 8% and 20% by weight, preferably between 10% and 15% by weight and the concentration of the additives for the formation of the pores, when present, is comprised between 3% and 25% by weight, preferably between 5% and 20% by weight.

10. The process according to any one of claims 7 to 9, wherein the polymers of the polymeric membranes are selected from polyvinylidene difluoride, polyethersulfone, polyimide and cellulose acetate.

11. The process according to any one of claims 7 to 10, wherein the additives for the formation of the pores are selected from polyethylene glycol and polyvinylpyrrolidone.

12. The process according to any one of claims 7 to 11, wherein the temperature in step 2) is comprised between 30°C and 90°C, preferably between 40°C and 80°C.

13. The process according to any one of claims 7 to 12, wherein the polymeric membranes are obtained by the NIPS (Non-solvent Induced Phase Separation), VIPS (Vapour Induced Phase Separation) techniques, or a combination thereof.

14. The process according to any one of claims 7 to 13, comprising the formation of dense membranes or porous membranes with a pore diameter smaller than 0.012 microns, or between 0.05 and 0.2 microns, or between 0.08 and 0.22 microns, or between 0.6 and 1.3 microns, or between 0.05 and 2.2 microns, or between 0.15 and 0.35 microns, or between 0.35 and 0.80 microns.

15. Use of the solvent compositions according to any one of claims 1 to 6 for preparing planar or tubular, dense or porous, polymeric membranes.
